# EUROPÄISCHE PATENTSCHRIFT

(11) **EP 3 390 247 B1**
(45) Veröffentlichungstag und Bekanntmachung des Hinweises auf die Patenterteilung: **06.07.2022**
(21) Anmeldenummer: 16809355.7
(22) Anmeldetag: 07.12.2016
(51) Int. Cl.: B65G 17/00, B23Q 7/14, B65G 19/02

(54) **TRANSPORTSYSTEM FÜR EINE ANLAGE, INSBESONDERE EINE HERSTELL-, VERPACKUNGS-, ABFÜLL-, MONTAGE-, UND/ODER BEARBEITUNGSANLAGE**
TRANSPORTING SYSTEM FOR AN INSTALLATION, IN PARTICULAR A PRODUCTION, PACKAGING, FILLING, ASSEMBLY AND/OR PROCESSING INSTALLATION
SYSTÈME DE TRANSPORT POUR UNE INSTALLATION, EN PARTICULIER UNE INSTALLATION DE FABRICATION, D'EMBALLAGE, DE REMPLISSAGE, DE MONTAGE ET/OU D'USINAGE

(30) Priorität: 17.12.2015 DE 102015225834
(43) Veröffentlichungstag der Anmeldung: 24.10.2018
(73) Patentinhaber: OPTIMA consumer GmbH, 74523 Schwäbisch Hall (DE)
(72) Erfinder: METZ, Mathias, 83278 Traunstein (DE); MOLL, Michael, 74523 Schwäbisch Hall (DE)
(74) Vertreter: Patentanwälte Ruff, Wilhelm, Beier, Dauster & Partner mbB
(86) Internationale Anmeldenummer: PCT/EP2016/080089
(87) Internationale Veröffentlichungsnummer: WO 2017/102503

(56) Entgegenhaltungen:
- WO-A1-88/02345
- DE-B- 1 035 566
- US-A- 4 256 221
- US-A1- 2008 251 352

## Beschreibung

### ANWENDUNGSGEBIET UND STAND DER TECHNIK

Die Erfindung betrifft ein Transportsystem für eine Anlage, insbesondere eine Herstell-, Verpackungs-, Abfüll-, Montage-, und/oder Bearbeitungsanlage. Die Erfindung betrifft weiter eine Anlage, insbesondere eine Herstell-, Verpackungs-, Abfüll-, Montage-, und/oder Bearbeitungsanlage mit einem Transportsystem. Die Erfindung betrifft weiter ein Verfahren zum Transport von Trägerelementen in einer Anlage, insbesondere eine Herstell-, Verpackungs-, Abfüll-, Montage-, und/oder Bearbeitungsanlage,

In einer Herstell-, Verpackungs-, Abfüll-, Montage-, und/oder Bearbeitungsanlage werden Behälter, Behälterpaletten, Werkstücke und/oder Werkstückträger entlang einer Förderstrecke zu verschiedenen Stationen gefördert und dort einer Behandlung unterzogen. Beispielsweise werden in einer Abfüllanlage Behälter in verschiedenen Stationen ausgeformt, befüllt, verschlossen und umverpackt.

Eine modulare Anlage zum Abfüllen von abzufüllendem Gut in einzelne Behälter ist beispielsweise aus DE 10 2004 044 846 A1 bekannt. Die Anlage umfasst ein Transportsystem, welches wahlweise über die gesamte Förderstrecke in einem intermittierenden Betrieb oder einen kontinuierlichen Betrieb betreibbar ist. Bei einem intermittierenden Betrieb ist ein Bearbeitungstakt für alle Stationen gleich und wird zentral festgelegt. Bei einem kontinuierlichen Betrieb werden alle Stationen mit der gleichen Geschwindigkeit durchlaufen. Je nach Bearbeitungsschritt ist ein kontinuierlicher Transport oder ein intermittierender Transport der Behälter vorteilhaft. Beispielsweise ist ein intermittierender Betrieb beim Ausformen oder Einsetzes eines Bechers vorteilhaft, um ein Mitbewegen der Werkzeuge zu vermeiden. Dagegen erfolgt ein Abfüllen von Flüssigkeiten vorzugsweise in einem kontinuierlichen Betrieb, um einen Überschwappen der eingefüllten Flüssigkeiten zu verhindern. Es ist daher bekannt, mehrere hintereinander in Reihe angeordnete Förderstrecken vorzusehen, sodass die einzelnen Stationen jeweils mit einem geeigneten Betriebsmodus durchlaufen werden. Dabei müssen Behälter, Behälterpaletten, Werkstücke und/oder Werkstückträger von einer Förderstrecke auf eine andere Förderstrecke umgesetzt werden.

Aus WO 88/02345 A1 ist eine Fördereinrichtung mit mindestens zwei parallel zueinander verlaufenden Endlosförderern, die eine im wesentlichen geschlossene Förderfläche bilden, und mit Paletten, die über Aufsetzelemente auf den Endlosförderern aufruhen, bekannt, wobei mindestens zwei der Endlosförderer mit unterschiedlicher Geschwindigkeit laufen; und ein Kraftschluss zwischen den Aufsetzelementen und den Förderflächen der Endlosförderer steuerbar ist. WO 88/02345 A1 offenbart ein Transportsystem nach dem Oberbegriff des

Anspruchs 1 und ein Verfahren nach dem Oberbegriff des Anspruchs 10.

Fördersysteme mit einer Mehrzahl an Förderketten, welche mit unterschiedlicher Fördergeschwindigkeiten betrieben werden, sind weiter aus DE 1 035 566 oder US 4,256,221 bekannt.

### AUFGABE UND LÖSUNG

Es ist eine Aufgabe, ein Transportsystem für eine Herstell-, Verpackungs-, Abfüll-, Montage-, und/oder Bearbeitungsanlage zu schaffen, welche ein Durchlaufen der einzelnen Stationen mit einem jeweils geeigneten Betriebsmodus ohne Wechsel der Förderstrecke ermöglicht. Es sind weitere Aufgaben, eine entsprechen Anlage und ein Verfahren zum Transport von Trägerelementen zu schaffen.

Gemäß einem ersten Aspekt werden bei einem Transportsystem für eine Anlage, insbesondere eine Herstell-, Verpackungs-, Abfüll-, Montage-, und/oder Bearbeitungsanlage, umfassend ein Trägersystem mit einer Förderstrecke und mit einer Vielzahl an Trägerelementen, eine erste Antriebsvorrichtung, wobei die Trägerelemente jeweils eine Kopplungseinrichtung aufweisen, mittels der die Trägerelemente mit der ersten Antriebsvorrichtung für eine Bewegung entlang der Förderstrecke koppelbar sind, mindestens eine zweite Antriebsvorrichtung und mindestens eine an der Förderstrecke positionierte Schalteinrichtung vorgesehen, wobei die Trägerelemente mittels der Kopplungseinrichtung mit der mindestens einen zweiten Antriebsvorrichtung für eine Bewegung entlang der Förderstrecke koppelbar sind, wobei die erste und die mindestens eine zweite Antriebsvorrichtung elektronisch und/oder mechanisch synchronisiert jeweils mit einer variablen, anwendungsspezifisch festlegbaren Fördergeschwindigkeit und mit unterschiedlichen Betriebsmodi ausgewählt aus der Gruppe umfassend kontinuierlicher Transport, single-index Transport, double-index Transport, multiple-index Transport betreibbar sind, und wobei mittels der mindestens einen Schalteinrichtung die Kopplungseinrichtungen der Trägerelemente wahlweise mit einer der Antriebsvorrichtungen für eine Bewegung entlang der Förderstrecke mit einem ausgewählten Betriebsmodus koppelbar sind.

Damit kann eine Anlage mit einer im Vorfeld definierbaren Förderstrecke geschaffen werden, wobei die Trägerelemente ohne die Förderstrecke zu verlassen entlang der Förderstrecke mittels verschiedener Antriebsvorrichtungen bewegbar sind.

Die Trägerelemente sind je nach Anforderung der Anlage durch den Fachmann geeignet gestaltbar. Sie dienen zur Aufnahme einer oder mehrerer Elemente oder Gegenstände. Beispielsweise sind die Trägerelemente für ein Transportsystem einer Abfüllanlage geeignet gestaltet, um Becher auszuformend oder um bereits ausgeformte Behälter aufzunehmen, wobei die Behälter entlang der Förderstrecke befüllt, versiegelt und umverpackt werden.

Mittels der Kopplungseinrichtung sind die Trägerelemente wahlweise mit einer der Antriebsvorrichtungen für eine Bewegungsübertragung koppelbar. Die Kopplungseinrichtung umfasst für diesen Zweck geeignete Elemente und ist je nach Anforderung geeignet gestaltet. In einer Ausgestaltung ist eine mechanische Kopplung vorgesehen. In anderen Ausgestaltungen ist eine magnetische, elektromechanische und/oder eine elektromagnetische Kopplung vorgesehen.

Erfindungsgemäß sind für die Bewegung der Trägerelemente entlang der Förderstrecke mindestens zwei Antriebsvorrichtungen vorgesehen. Mittels mindestens einer an der Förderstrecke positionierten Schalteinrichtung ist ein Wechsel der Antriebsvorrichtungen möglich. Durch Anpassung der Position und Anzahl der Schalteinrichtung ist so eine Anpassung der Anlage an unterschiedliche Anforderungen möglich.

Die erste und die mindestens eine zweite Antriebsvorrichtung sind jeweils mit einer variablen, anwendungsspezifisch festlegbaren Fördergeschwindigkeit betreibbar. Die die erste und die mindestens eine zweite Antriebsvorrichtung sind dabei elektronisch und/oder mechanisch synchronisiert betreibbar. Dadurch ist es möglich, die Fördergeschwindigkeit der Anlage zu variieren, wobei die Antriebsvorrichtungen in jeder Fördergeschwindigkeit aufeinander abgestimmt bleiben, sodass Staupunkte oder andere Unregelmäßigkeiten in dem Förderstrom vermieden werden. Die Synchronisation der Antriebsvorrichtungen ist dabei derart möglich, dass - je nach Bedarf - bei einem Wechsel der Antriebsvorrichtungen Lücken zwischen Trägerelementen geschlossen oder erzeugt werden oder ein Wechsel erfolgt, ohne dass - mit Ausnahme eines Übergabebereichs - Lücken erzeugt oder geschlossen werden. Für eine Synchronisation ist in einer Ausgestaltung vorgesehen, dass die erste und die mindestens eine zweite Antriebsvorrichtung mit einer gleichen, zentral festlegbaren, durchschnittlichen Fördergeschwindigkeit betreibbar sind. Zu diesem Zweck ist in einer Ausgestaltung ein gemeinsamer Antriebsmotor für beide Antriebsvorrichtungen vorgesehen. In anderen Ausgestaltungen sind zwei synchronisierte Antriebsmotoren vorgesehen. Die Synchronisation erfolgt beispielsweise mittels einer zentralen Steuereinrichtung oder über einen Master-Slave-Betrieb der Antriebsmotoren. In wieder anderen Ausgestaltungen variieren die Fördergeschwindigkeiten, wobei beispielsweise mittels der zweiten Antriebseinrichtung ein Transport über einen definierten Abschnitt der Förderstrecke mit einer höheren Geschwindigkeit erfolgt als mittels der ersten Antriebseinrichtung.

Die erste und die mindestens eine zweite Antriebsvorrichtung sind mit unterschiedlichen Betriebsmodi ausgewählt aus der Gruppe umfassend kontinuierlicher Transport, single-index Transport, double-index Transport, multiple-index Transport betreibbar. Als single-index, double-index und multiple-index Transport wird im Zusammenhang mit der Anmeldung ein intermittierender Transport bezeichnet, wobei ein Vorzug der transportierenden Gegenstände, d.h. vorliegend der Transportträger, in einem Maschinentakt vereinzelt, als Paar bzw. als Gruppe erfolgt.

Die Zahl und Länge der Antriebsvorrichtungen, mit welcher die Trägerelemente koppelbar sind, ist je nach Anforderung der Anlage geeignet wählbar. In einer Ausgestaltung sind die Antriebsvorrichtungen in Reihe angeordnet.

In vorteilhaften Ausgestaltungen ist vorgesehen, dass die erste Antriebsvorrichtung sich mindestens über einen ersten Abschnitt der Förderstrecke erstreckt und die zweite Antriebsvorrichtung sich mindestens über einen zweiten Abschnitt der Förderstrecke erstreckt, wobei der erste Abschnitt und der zweite Abschnitt einander überlappen. In anderen Worten erstrecken sich die Antriebsvorrichtungen in vorteilhaften Ausgestaltungen zumindest abschnittsweise parallel, sodass je nach Bedarf der Anlage eine Bewegung über einen Abschnitt der Förderstrecke wahlweise mittels der ersten oder der zweiten Antriebsvorrichtung möglich ist. Dadurch wird ein System mit eine hohen Flexibilität geschaffen, das bei einer Veränderung der Anforderungen schnell und einfach umrüstbar ist. In einer Ausgestaltung erstreckt sich die erste Antriebsvorrichtung über die gesamte Förderstrecke, d.h. das in jedem Abschnitt der Förderstrecke eine Bewegung der Trägerelemente mittels der ersten Antriebsvorrichtung möglich ist. Die zweite Antriebsvorrichtung erstreckt sich in einer Ausgestaltung dagegen nur über einen Abschnitt der Förderstrecke, in welchem ein anderer als der durch die erste Antriebsvorrichtung vorgegebener Betriebsmodus gewünscht oder erforderlich ist. In anderen Ausgestaltungen erstrecken sich die erste und die zweite Antriebsvorrichtung über die gesamte Förderstrecke.

Die Antriebsvorrichtungen sind je nach Anforderungen durch den Fachmann geeignet gestaltbar. In vorteilhaften Ausgestaltungen sind die erste und die mindestens eine zweite Antriebsvorrichtung als Zahnstangenantrieb, Kettenantrieb, Riemenantrieb, Rechenantrieb, Schneckenantrieb und/oder Linearmotorantrieb gestaltet. Dabei sind in einer Ausgestaltung eine erste Antriebsvorrichtung und eine zweite Antriebsvorrichtung von unterschiedlicher Bauart vorgesehen. Beispielsweise ist für einen kontinuierlichen Antrieb eine Kette vorgesehen, wohingegen für einen individuellen Antrieb der Trägerelemente in einem Abschnitt der Förderstrecke ein Antrieb mittels den Trägerelementen zugeordneten Linearmotoren erfolgt. Die Kopplungseinrichtung ist hierfür beispielsweise derart gestaltet, dass eine mechanische Kopplung mit der Kette und Entkopplung von der Kette und eine Aktivierung und Deaktivierung der Linearmotoren mittels der Schalteinrichtung möglich ist.

In vorteilhaften Ausgestaltungen sind die erste und die mindestens eine zweite Antriebsvorrichtung gleicher Bauart. Dadurch kann die Komplexität des Transportsystems minimiert werden.

Die Kopplungseinrichtung ist durch den Fachmann angepasst an die Wahl der Antriebsvorrichtungen geeignet gestaltbar.

In einer Ausgestaltung ist vorgesehen, dass die Trägerelemente als Kopplungseinrichtung fungieren und/oder jeweils eine starr an dem Trägerelement angeordnete Kopplungseinrichtung aufweisen, wobei die Trägerelemente mittels der Schalteinrichtung für einen Wechsel der Antriebsvorrichtung quer zur Förderstrecke versetzbar sind. Die Trägerelemente weisen beispielsweise mindestens nach unten abragenden Zapfen auf, welcher je nach Querversatz der Trägerelemente zu einer Mittellinie der Förderstrecke mit der ersten oder der zweiten Antriebsvorrichtung zusammenwirkt.

In einer Ausgestaltung ist eine mechanische oder elektromechanische Kopplungseinrichtung umfassend mindestens einen verstellbaren Kopplungsblock vorgesehen, wobei der mindestens eine Kopplungsblock mittels der Schalteinrichtung verstellbar und dadurch mit einer der Antriebsvorrichtungen für eine Bewegung entlang der Förderstrecke koppelbar oder von dieser entkoppelbar ist. Der Kopplungsblock weist in einer Ausgestaltung einen Stift auf, welcher in eine Ausnehmung an der Antriebsvorrichtung einrückbar ist. In anderen Ausgestaltungen weist der Kopplungsblock eine Ausnehmung auf, in welche ein an der Antriebsvorrichtung vorgesehener Stift einrückbar ist. Dabei ist in einer Ausgestaltung für jede Antriebsvorrichtung mindestens ein Kopplungsblock vorgesehen. In vorteilhaften Ausgestaltungen ist ein Kopplungsblock vorgesehen, welcher durch eine Verstellbewegung wahlweise mit einer der Antriebsvorrichtungen koppelbar ist. Die Antriebsvorrichtungen weisen in einer Ausgestaltung jeweils zwei oder mehr Antriebsstränge auf, wobei für jeden Antriebsstrang separate Kopplungselemente vorgesehen sind.

Für ein Verstellbewegung des Trägerelements bzw. des Kopplungsblocks oder der Kopplungsblöcke weist die Schalteinrichtung in vorteilhaften Ausgestaltungen mindestens eine an der Förderstrecke angeordnete Schikane auf, wobei das Trägerelement oder der Kopplungsblock mittels der Schikane aus einer ersten Position, in welcher es/er mit der ersten Antriebsvorrichtung zusammenwirkt, in eine zweite Position, in welcher es/er mit einer zweiten Antriebsvorrichtung zusammenwirkt, verstellbar, insbesondere verschieblich ist. Dadurch ist eine einfache und damit wenig störanfällige mechanische Lösung geschaffen.

Um einen gleichzeitigen Antrieb mittels mehrere Antriebsvorrichtungen und daraus resultierende entgegengesetzt wirkenden Kräfte auf das Trägerelement zu vermeiden ist in einer Ausgestaltung ein Übergangsbereich vorgesehen, wobei während eines Wechsels der Antriebsvorrichtungen die Trägerelemente in dem Übergangsbereich mit keiner Antriebsvorrichtung zusammenwirken, und die Trägerelemente passiv mittels nachfolgender Trägerelemente entlang der Förderstrecke bewegbar sind.

Gemäß einem zweiten Aspekt wird eine Anlage, insbesondere eine Herstell-, Verpackungs-, Abfüll-, Montage-, und/oder Bearbeitungsanlage, umfassend ein erfindungsgemäßes Transportsystem geschaffen. Die Anlage ist in einer Ausgestaltung als Abfüllanlage umfassend eine Behälterzuführung, eine Behälterreinigung, eine Behälterfüllung, eine Wiegestation, eine Zuführung von Behälterverschlüssen, eine Schließstation und ein Kontrollsystem gestaltet. In anderen Ausgestaltungen sind andere, zusätzliche oder weniger Stationen vorgesehen. Die Füllgüter sind je nach Ausgestaltung Pulver, Pasten, Flüssigkeiten, insbesondere Nahrungsmittel, Genussmittel, Reinigungsmittel, kosmetische Erzeugnisse oder pharmazeutische Erzeugnisse.

Gemäß einem weiteren Aspekt wird ein Verfahren zum Transport von Trägerelementen in einer Anlage, insbesondere einer Herstell-, Verpackungs-, Abfüll-, Montage-, und/oder Bearbeitungsanlage, geschaffen, wobei die Trägerelemente jeweils mittels einer Kopplungseinrichtung wahlweise mit einer ersten Antriebsvorrichtung oder mindestens einer zweiten Antriebsvorrichtung für eine Bewegung entlang einer Förderstrecke gekoppelt werden, wobei die erste und die mindestens eine zweite Antriebsvorrichtung elektronisch und/oder mechanisch synchronisiert jeweils mit einer variablen, anwendungsspezifisch festlegbaren Fördergeschwindigkeit und mit unterschiedlichen Betriebsmodi ausgewählt aus der Gruppe umfassend kontinuierlicher Transport, single-index Transport, double-index Transport, multiple-index Transport betrieben werden, wobei die Trägerelemente entlang der Förderstrecke mittels der ersten Antriebseinrichtung mit einem ersten Betriebsmodus bewegt werden und wobei mittels einer Schalteinrichtung die Kopplungseinrichtung der Trägerelemente von der ersten Antriebsvorrichtung entkoppelt und mit der mindestens einen zweiten Antriebsvorrichtungen für eine Bewegung entlang der Förderstrecke mit einem zweiten Betriebsmodus gekoppelt werden. Die Trägerelemente werden entlang einer im Vorfeld definierten Förderstrecke gefördert, wobei vorzugsweise für keinen Bearbeitungsschritt ein Verlassen der Förderstrecke notwendig ist. Die Trägerelemente dienen dabei wie beschrieben in einer Ausgestaltung selbst als Kopplungseinrichtung.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Draufsicht auf ein Ausführungsbeispiel eines Transportsystems;
- Fig. 2: ein Detail II gemäß Fig. 1 und
- Fig. 3: eine schematische Schnittdarstellung eines Trägerelements mit einem quer zur Förderstrecke verschieblich angebrachten Kopplungsblock.

### DETAILLIERTE BESCHREIBUNG DER AUSFÜHRUNGSBEISPIELE

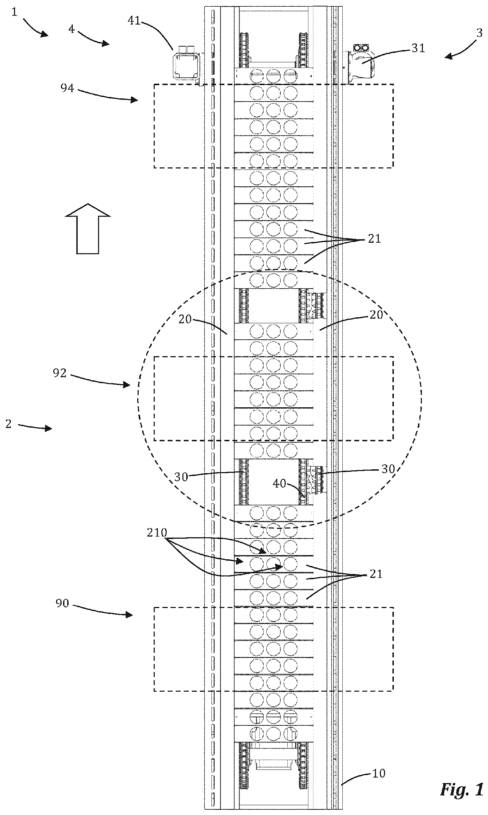

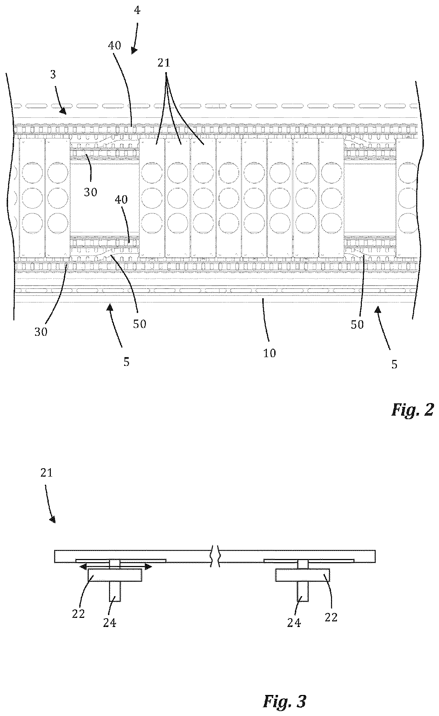

Fig. 1 zeigt eine Draufsicht auf ein Ausführungsbeispiel eines Transportsystems 1 für eine Stationen 90, 92, 94 umfassende Anlage. Fig. 2 zeigt ein Detail II des Transportsystems 1 gemäß Fig. 1 in einer vergrößerten Darstellung.

Das Transportsystem 1 umfasst ein Trägersystem 2 mit einer in dem dargestellten Ausführungsbeispiel durch zwei parallele Führungsschienen 20 gebildeten Förderstrecke und einer Vielzahl an Trägerelementen 21, welche entlang der Führungsschienen 20 in einer durch einen Pfeil gekennzeichneten Transportrichtung verschieblich geführt sind. In anderen Ausgestaltungen ist nur eine Führungsschiene 20 vorgesehen oder sind keine Führungsschienen vorgesehen, wobei die Förderstrecke durch alternative Elemente gestaltet ist. Zur besseren Übersicht sind die Führungsschienen 20 in Fig. 2 nicht dargestellt.

Die dargestellten Trägerelemente 21 weisen jeweils drei Ausnehmungen auf, in welche beispielsweise nicht dargestellte Behälter für einen Transport in einer Verpackungs- oder Abfüllanlage eingesetzt werden können. Die Behälter sind so geordnet in mehreren Reihen, im Ausführungsbeispiel in Dreierreihen einzelnen, in Fig. 1 durch gestrichelte Linien angedeuteten, Stationen 90, 92, 94 der Anlage zuführbar. Die Zahl und Form der Ausnehmungen und/oder anderer Bauteile zum Aufnehmen von Bearbeitungsgegenständen sind durch den Fachmann je nach Anwendungsfall geeignet wählbar. Dabei ist es auch denkbar, beispielsweise in einer Montagelinie Gegenstände lediglich auf den Trägerelementen abzustellen, ohne dass Haltemittel zwischen den Gegenständen und den Trägerelementen 21 vorgesehen sind. Vorzugsweise sind jedoch zumindest Positionierhilfen vorgesehen, welche eine exakte und wiederholbare Positionierung der Gegenstände auf den Trägerelementen 21 ermöglichen.

Bei den Stationen 90, 92, 94 handelt es sich beispielsweise um eine Behälterreinigungsstation 90, eine Füllstation 92 und eine Entladestation 94. Je nach Gestaltung einer Anlage sind jedoch auch andere, zusätzliche oder weniger Stationen denkbar. Für ein optimales Durchlaufen der Stationen sind verschiedene Betriebsmodi vorteilhaft. So durchlaufen die Trägerelemente 21 die Behälterreinigungsstation 90 vorzugsweise mit einer getakteten Bewegung, wobei die Trägerelemente 21 der Station 90 zugeführt, dort gestoppt und gereinigt und anschließend wieder von der Station abgeführt werden. Ein Befüllen erfolgt dagegen vorzugsweise bei einer kontinuierlichen Bewegung der Trägerelemente 21.

Das dargestellte Transportsystem 1 umfasst zu diesem Zweck eine erste Antriebsvorrichtung 3 und eine zweite, zu der ersten Antriebsvorrichtung 3 parallel angeordnete Antriebsvorrichtung 4. In anderen Ausführungsbeispielen sind noch weitere Antriebsvorrichtungen vorgesehen. In dem dargestellten Ausführungsbeispiel handelt es sich bei den Antriebsvorrichtungen 3, 4 jeweils um Kettenantriebe, wobei jede Antriebsvorrichtung 3, 4 zwei parallel geführte Antriebsketten 30, 40 umfasst. Die zwei Antriebsketten 30, 40 jeder Antriebsvorrichtung 3, 4 sind in dem dargestellten Ausführungsbeispiel jeweils über eine Kupplungsstange mechanisch miteinander gekoppelt und werden jeweils durch einen zugeordneten Antriebsmotor 31, 41 angetrieben. Es sind jedoch auch andere Ausgestaltungen denkbar, wobei die Antriebsketten 30, 40 mittels eines gemeinsamen Antriebs angetrieben werden.

Die Trägerelemente 2 sind für eine Bewegung entlang der Führungsschienen 20 mit der ersten oder mit der zweiten Antriebsvorrichtung 3, 4 koppelbar. Beide Antriebsvorrichtungen 3, 4 erstrecken sich in dem dargestellten Ausführungsbeispiel über die gesamte Länge der Förderstrecke und sind grundsätzlich geeignet, mit der Antriebsvorrichtung 3, 4 gekoppelte Trägerelemente 21 über die gesamte Förderstrecke zu transportieren.

Die beiden Antriebsvorrichtungen 3, 4 sind in verschiedenen Betriebsmodi betreibbar. In dem dargestellten Ausführungsbeispiel ist vorgesehen, dass mittels der ersten Antriebsvorrichtung 3 ein intermittierender Vorschub der Trägerelemente 21 und mittels der zweiten Antriebsvorrichtung 4 ein kontinuierliche Vorschub der Trägerelemente 21 erfolgt. Selbstverständlich ist jedoch auch eine andere Wahl des jeweiligen Betriebsmodus denkbar.

Für einen intermittierenden Vorschub umfasst die erste Antriebsvorrichtung 3 vorzugsweise ein nicht dargestelltes zwischen dem Antriebsmotor 31 und den zwei Antriebsketten 30 der ersten Antriebsvorrichtung 3 angeordnetes Schrittgetriebe, mittels welchem eine kontinuierliche Bewegung des Antriebsmotors 31 in eine intermittierende Bewegung der Antriebsketten 30 umwandelbar ist. Für den kontinuierlichen Betriebsmodus der zweiten Antriebsvorrichtung ist beispielsweise als Antriebsmotor 41 der zweiten Antriebsvorrichtung 4 ein Servomotor vorgesehen, welcher die zwei parallel geführten Antriebsketten 40 der zweiten Antriebsvorrichtung antreibt.

In dem dargestellten Ausführungsbeispiel sind zwei Antriebsmotoren 31, 41 vorgesehen, die an gegenüberliegenden Seiten eines Tragrahmens 10 des Transportsystems 1 angeordnet sind. Es sind jedoch auch andere Anordnungen denkbar. Die zwei Antriebsmotoren 31, 41 sind miteinander synchronisiert, wobei zu diesem Zweck beispielsweise eine nicht dargestellte übergeordnete Regeleinrichtung vorgesehen ist oder die Antriebsmotoren 31, 41 in einem Master-Slave-Modus betrieben werden. Alternativ ist es auch denkbar, einem gemeinsamen Antriebsmotor für beide Antriebsvorrichtungen 3, 4 vorzusehen, wobei mittels geeigneter Getriebeelemente unterschiedliche Betriebsmodi der Antriebsvorrichtungen realisierbar sind.

An den Trägerelementen 21 sind jeweils in den Fig. 1 und 2 nicht sichtbare Kopplungseinrichtung vorgesehen, mittels der die Trägerelemente 21 mit der ersten oder der zweiten Antriebsvorrichtung 3, 4 für eine Bewegung entlang der Förderstrecke koppelbar sind.

Für einen Wechsel der Antriebsvorrichtung 3, 4 und damit einen Wechsel der Antriebsart der Trägerelemente 21 umfasst das Transportsystem 1 weiter mindestens eine Schalteinrichtung 5, in dem dargestellten Ausführungsbeispiel sind zwei Schalteinrichtungen 5 für zwei Wechsel der Antriebsart vorgesehen. Die Schalteinrichtungen 5 sind an geeigneten Positionen entlang der Förderstrecke angeordnet, wobei durch Wahl der Position sowie Anzahl der Schalteinrichtungen eine Anpassung an unterschiedliche Anforderungen der Anlage möglich ist.

Die dargestellten Schalteinrichtungen 5 umfassen jeweils Schikanen 50, mittels welcher eine Betätigung der Kopplungseinrichtungen zum Entkoppeln der Trägerelemente 21 von einer Antriebsvorrichtung 3, 4 und zur Kopplung mit der jeweils anderen Antriebsvorrichtung erfolgt.

Fig. 3 zeigt schematisch eine Seitenansicht einer Ausgestaltung eines Trägerelements 21, an welchem als Kopplungseinrichtung an einer Unterseite seitlich jeweils ein, wie durch einen Pfeil angedeutet, quer zur Transportrichtung verschieblicher Kopplungsblock 22 vorgesehen ist. Durch eine Verstellbewegung des Kopplungsblocks 22 ist dieser wahlweise mit einer der Antriebsvorrichtungen koppelbar und von der jeweils anderen Antriebsvorrichtung entkoppelbar. In dem dargestellten Ausführungsbeispiel weisen die Kopplungsblöcke 22 jeweils Gleitsteine 24 auf, welche mit den in Fig. 2 dargestellten Schikanen 50 für eine Verstellbewegung der Kopplungsblöcke 22 zusammenwirken. Die Schikanen 50 sind hierzu als Führungskulissen gestaltet, wobei die Gleitsteine 24 vorzugsweise nur abschnittsweise durch die Führungskulissen geführt werden. Dabei sind geeignete Vorkehrungen für ein Einfädeln der Gleitsteine 24 in die Führungskulissen zum Verhindern eines Verkantens der Gleitsteine 24 getroffen. In dem dargestellten Ausführungsbeispiel werden die Kopplungsblöcke 22 eines Antriebsblocks jeweils getrennt verstellt. In anderen Ausgestaltungen sind die Kopplungsblöcke 22 mittels einer Verbindungsstange für eine Übertragung der Verstellbewegung gekoppelt.

Die Schikanen 50 sind vorzugsweise derart gestaltet, dass zunächst ein vollständiges Trennen der Kopplungseinrichtungen von einer Antriebsvorrichtung 3, 4 erfolgt und erst nach der vollständigen Trennung die Kopplungseinrichtungen mit einer anderen Antriebsvorrichtung 4, 3 gekoppelt werden. Während eines Wechsels der Antriebsvorrichtung 3, 4 wirken die Trägerelemente 22 folglich in einem Übergangsbereich mit keiner Antriebsvorrichtung 3, 4 zusammen. Ein Transport der Trägerelemente 21 entlang der Förderstrecke in diesem Übergangsbereich erfolgt passiv mittels nachfolgender Trägerelemente 21. Durch den Übergangsbereich ist sichergestellt, dass zu keinem Zeitpunkt eine Kopplung mit mehr als einer Antriebsvorrichtung erfolgt.

In einer anderen Ausgestaltung werden mittels der Schikanen 50 die Trägerelemente 21 quer zur Förderstrecke versetzt, wobei in diesem Fall auf seitliche Führungsschienen 20 verzichtet wird oder die Führungsschienen 20 derart angeordnet sind, dass die Trägerelemente 21 in jeder Lage jeweils einseitig seitlich geführt werden.

## Patentansprüche

1. Transportsystem für eine Anlage, insbesondere eine Herstell-, Verpackungs-, Abfüll-, Montage-, und/oder Bearbeitungsanlage, umfassend
- ein Trägersystem (2) mit einer Förderstrecke und mit einer Vielzahl an Trägerelementen (21),
- eine erste Antriebsvorrichtung (3),
wobei die Trägerelemente (21) jeweils eine Kopplungseinrichtung aufweisen, mittels der die Trägerelemente (21) mit der ersten Antriebsvorrichtung (3) für eine Bewegung entlang der Förderstrecke koppelbar sind,
- mindestens eine zweite Antriebsvorrichtung (4) und
- mindestens eine an der Förderstrecke positionierte Schalteinrichtung (5),
wobei die Trägerelemente (21) mittels der Kopplungseinrichtung mit der mindestens einen zweiten Antriebsvorrichtung (4) für eine Bewegung entlang der Förderstrecke koppelbar sind, **dadurch gekennzeichnet, dass**
die erste und die mindestens eine zweite Antriebsvorrichtung (3, 4) elektronisch und/oder mechanisch synchronisiert jeweils mit einer variablen, anwendungsspezifisch festlegbaren Fördergeschwindigkeit und mit unterschiedlichen Betriebsmodi ausgewählt aus der Gruppe umfassend kontinuierlicher Transport, single-index Transport, double-index Transport, multiple-index Transport betreibbar sind, wobei mittels der mindestens einen Schalteinrichtung (5) die Kopplungseinrichtungen der Trägerelemente (21) wahlweise mit einer der Antriebsvorrichtungen (3, 4) für eine Bewegung entlang der Förderstrecke mit einem ausgewählten Betriebsmodus koppelbar sind.

2. Transportsystem nach Anspruch 1, **dadurch gekennzeichnet, dass** die erste Antriebsvorrichtung (3) sich mindestens über einen ersten Abschnitt der Förderstrecke erstreckt und die zweite Antriebsvorrichtung (4) sich mindestens über einen zweiten Abschnitt der Förderstrecke erstreckt, wobei der erste Abschnitt und der zweite Abschnitt einander überlappen.

3. Transportsystem nach Anspruch 1 oder 2, **dadurch gekennzeichnet, dass** die erste und die mindestens eine zweite Antriebsvorrichtung (3, 4) als Zahnstangenantrieb, Kettenantrieb, Riemenantrieb, Rechenantrieb, Schneckenantrieb und/oder Linearmotorantrieb gestaltet sind, wobei vorzugsweise die erste und die mindestens eine zweite Antriebsvorrichtung (3, 4) gleicher Bauart sind.

4. Transportsystem nach einem der Ansprüche 1 bis 3, **dadurch gekennzeichnet, dass** die Trägerelemente als Kopplungseinrichtung fungieren und/oder jeweils eine starr an dem Trägerelement angeordnete Kopplungseinrichtung aufweisen, wobei die Trägerelemente mittels der Schalteinrichtung für einen Wechsel der Antriebsvorrichtung quer zur Förderstrecke versetzbar sind.

5. Transportsystem nach einem der Ansprüche 1 bis 4, **dadurch gekennzeichnet, dass** die Kopplungseinrichtung eines Trägerelements (21) mindestens einen verstellbaren Kopplungsblock (22) umfasst, welcher mittels der mindestens einen Schalteinrichtung (5) mit einer der Antriebsvorrichtungen (3, 4) für eine Bewegung entlang der Förderstrecke koppelbar und von der mindestens einen weiteren Antriebsvorrichtung (3, 4) entkoppelbar ist.

6. Transportsystem nach Anspruch 4 oder 5, **dadurch gekennzeichnet, dass** die Schalteinrichtung (5) mindestens eine an der Förderstrecke angeordnete Schikane (50) aufweist, wobei das Trägerelement und/oder der Kopplungsblock (22) mittels der Schikane (50) aus einer ersten Position, in welcher es/er mit der ersten Antriebsvorrichtung (3) zusammenwirkt, in eine zweite Position, in welcher es/er mit einer zweiten Antriebsvorrichtung (4) zusammenwirkt, verstellbar, insbesondere verschieblich ist.

7. Transportsystem nach einem der Ansprüche 1 bis 6, **dadurch gekennzeichnet, dass** während eines Wechsels der Antriebsvorrichtung (3, 4) die Trägerelemente in einem Übergangsbereich mit keiner Antriebsvorrichtung (3, 4) zusammenwirken, wobei die Trägerelemente (21) passiv mittels nachfolgender Trägerelemente (21) entlang der Förderstrecke bewegbar sind.

8. Transportsystem nach einem der Ansprüche 1 bis 7, **dadurch gekennzeichnet, dass** die Förderstrecke mindestens eine Führungsschiene (20) umfasst, an welcher die Trägerelemente (21) passiv oder mittels einer der Antriebsvorrichtungen (3, 4) verschieblich geführt sind.

9. Anlage, insbesondere eine Herstell-, Verpackungs-, Abfüll-, Montage-, und/oder Bearbeitungsanlage, umfassend ein Transportsystem (1) nach einem der Ansprüche 1 bis 8.

10. Verfahren zum Transport von Trägerelementen (21) in einer Anlage, insbesondere einer Herstell-, Verpackungs-, Abfüll-, Montage-, und/oder Bearbeitungsanlage, wobei die Trägerelemente (21) jeweils mittels einer Kopplungseinrichtung wahlweise mit einer ersten Antriebsvorrichtung (3) oder mindestens einer zweiten Antriebsvorrichtung (4) für eine Bewegung entlang einer Förderstrecke gekoppelt werden,
**dadurch gekennzeichnet, dass**
die erste und die mindestens eine zweite Antriebsvorrichtung (3, 4) elektronisch und/oder mechanisch synchronisiert jeweils mit einer variablen, anwendungsspezifisch festlegbaren Fördergeschwindigkeit und mit unterschiedlichen Betriebsmodi ausgewählt aus der Gruppe umfassend kontinuierlicher Transport, single-index Transport, double-index Transport, multiple-index Transport betrieben werden,
die Trägerelemente (21) entlang der Förderstrecke mittels der ersten Antriebseinrichtung (3) mit einem ersten Betriebsmodus bewegt werden und
mittels einer Schalteinrichtung (5) die Kopplungseinrichtungen der Trägerelemente (21) von der ersten Antriebsvorrichtung (3) entkoppelt und mit der mindestens einen zweiten Antriebsvorrichtung (4) für eine Bewegung entlang der Förderstrecke mit einem zweiten Betriebsmodus gekoppelt werden.

## Claims

1. Transport system for an installation, in particular a production, packaging, filling, assembly and/or processing installation, comprising
- a carrier system (2) having a conveying section and having a multiplicity of carrier elements (21); and
- a first drive device (3),
wherein the carrier elements (21) have in each case one coupling installation by means of which the carrier elements (21) for a movement along the conveying section are capable of being coupled to the first drive device (3),
- at least one second drive device (4); and
- at least one switching installation (5) that is positioned on the conveying section,
wherein the carrier elements (21) by means of the coupling installation for a movement along the conveying section are capable of being coupled to the at least one second drive device (4),
**characterized in that**
the first and the at least one second drive device (3, 4), in an electronically and/or mechanically synchronized manner, are in each case capable of being operated at a variable conveying speed capable of being established so as to be specific to the application and by way of dissimilar operating modes selected from the group comprising continuous transportation, single-index transportation, double-index transportation, multiple-index transportation, and wherein by means of the at least one switching installation (5) the coupling installations of the carrier elements (21) for a movement along the conveying section by way of a selected operating mode are capable of being selectively coupled to one of the drive devices (3, 4) .

2. Transport system according to Claim 1, **characterized in that** the first drive device (3) extends at least across one first portion of the conveying section, and the second drive device (4) extends at least across one second portion of the conveying section, wherein the first portion and the second portion are mutually overlapping.

3. Transport system according to Claim 1 or 2, **characterized in that** the first and the at least one second drive device (3, 4) are designed as a gear rack drive, chain drive, belt drive, rake drive, worm drive, and/or linear motor drive, wherein the first and the at least one second drive device (3, 4) are preferably of an identical construction mode.

4. Transport system according to one of Claims 1 to 3, **characterized in that** the carrier elements function as a coupling installation and/or have in each case one coupling installation that is rigidly disposed on the carrier element, wherein the carrier elements by means of the switching installation are relocatable transversely to the conveying section in order for the drive device to be changed.

5. Transport system according to one of Claims 1 to 4, **characterized in that** the coupling installation of a carrier element (21) comprises at least one adjustable coupling block (22) which by means of the at least one switching installation (5) for a movement along the conveying section is capable of being coupled to one of the drive devices (3, 4) and is capable of being decoupled from the at least one further drive device (3, 4).

6. Transport system according to Claim 4 or 5, **characterized in that** the switching installation (5) has at least one chicane (50) that is disposed on the conveying section, wherein the carrier element and/or the coupling block (22) by means of the chicane (50) are/is adjustable, in particular displaceable, from a first position in which said carrier element and/or coupling block (22) interact/s with the first drive device (3) to a second position in which said carrier element and/or coupling block (22) interact/s with a second drive device (4).

7. Transport system according to one of Claims 1 to 6, **characterized in that** the carrier elements during a change of the drive device (3, 4) in a transition region do not interact with any drive device (3, 4), wherein the carrier elements (21) by means of successive carrier elements (21) are movable in a passive manner along the conveying section.

8. Transport system according to one of Claims 1 to 7, **characterized in that** the conveying section comprises at least one guide rail (20) on which the carrier elements (21) are guided in a passive manner, or by means of one of the drive devices (3, 4) are guided in a displaceable manner.

9. Installation, in particular a production, packaging, filling, assembly and/or processing installation, comprising a transport system (1) according to one of Claims 1 to 8.

10. Method for transporting carrier elements (21) in an installation, in particular a production, packaging, filling, assembly and/or processing installation, wherein the carrier elements (21) by means of in each case one coupling installation for a movement along a conveying section are selectively coupled to a first drive device (3) or at least one second drive device (4),
**characterized in that**
the first and the at least one second drive device (3, 4), in an electronically and/or mechanically synchronized manner, are in each case operated at a variable conveying speed capable of being established so as to be specific to the application and by way of dissimilar operating modes selected from the group comprising continuous transportation, single-index transportation, double-index transportation, multiple-index transportation;
the carrier elements (21) by means of the first drive device (3) are moved along the conveying section by way of a first operating mode; and
by means of a switching installation (5) the coupling installations of the carrier elements (21) are decoupled from the first drive device (3) and for a movement along the conveying section are coupled to the at least one second drive device (4) by way of a second operating mode.

## Revendications

1. Système de transport pour une installation, en particulier une installation de fabrication, d'emballage, de remplissage, de montage et/ou d'usinage, comportant
- un système porteur (2) doté d'une voie de convoyage et d'une pluralité d'éléments porteurs (21),
- un premier dispositif d'entraînement (3),
les éléments porteurs (21) présentant respectivement un dispositif d'accouplement, au moyen duquel les éléments porteurs (21) peuvent être accouplés au premier dispositif d'entraînement (3) pour un déplacement le long de la voie de convoyage,
- au moins un deuxième dispositif d'entraînement (4) et
- au moins un dispositif de commutation (5) positionné au niveau de la voie de convoyage,
les éléments porteurs (21) pouvant être accouplés au moyen du dispositif d'accouplement à l'au moins un deuxième dispositif d'entraînement (4) pour un déplacement le long de la voie de convoyage, **caractérisé en ce que**
le premier et l'au moins un deuxième dispositif d'entraînement (3, 4) peuvent fonctionner de manière synchronisée de façon électronique et/ou mécanique respectivement avec une vitesse de convoyage variable pouvant être définie de manière spécifique à l'application et avec des modes de fonctionnement différents sélectionnés dans le groupe comportant le transport continu, le transport à indice unique, le transport à double indice, le transport à indices multiples, les dispositifs d'accouplement des éléments porteurs (21) pouvant, au moyen de l'au moins un dispositif de commutation (5), être accouplés sélectivement à l'un des dispositifs d'entraînement (3, 4) pour un déplacement le long de la voie de convoyage avec un mode de fonctionnement sélectionné.

2. Système de transport selon la revendication 1, **caractérisé en ce que** le premier dispositif d'entraînement (3) s'étend au moins sur une première section de la voie de convoyage et le deuxième dispositif d'entraînement (4) s'étend au moins sur une deuxième section de la voie de convoyage, la première section et la deuxième section se chevauchant.

3. Système de transport selon la revendication 1 ou 2, **caractérisé en ce que** le premier et l'au moins un deuxième dispositif d'entraînement (3, 4) sont configurés sous forme d'entraînement par crémaillère, d'entraînement par chaîne, d'entraînement par courroie, d'entraînement par râteau, d'entraînement par vis sans fin et/ou d'entraînement par moteur linéaire, le premier et l'au moins un deuxième dispositif d'entraînement (3, 4) étant de préférence de conception identique.

4. Système de transport selon l'une des revendications 1 à 3, **caractérisé en ce que** les éléments porteurs fonctionnent comme un dispositif d'accouplement et/ou présentent respectivement un dispositif d'accouplement disposé rigidement sur l'élément porteur, les éléments porteurs pouvant être décalés transversalement à la voie de convoyage au moyen du dispositif de commutation pour un changement du dispositif d'entraînement.

5. Système de transport selon l'une des revendications 1 à 4, **caractérisé en ce que** le dispositif d'accouplement d'un élément porteur (21) comporte au moins un bloc d'accouplement (22) réglable, lequel, au moyen de l'au moins un dispositif de commutation (5), peut être accouplé à l'un des dispositifs d'entraînement (3, 4) pour un déplacement le long de la voie de convoyage et peut être désaccouplé de l'au moins un autre dispositif d'entraînement (3, 4).

6. Système de transport selon la revendication 4 ou 5, **caractérisé en ce que** le dispositif de commutation (5) présente au moins une chicane (50) disposée au niveau de la voie de convoyage, l'élément porteur et/ou le bloc d'accouplement (22) étant réglable(s), en particulier mobile (s) au moyen de la chicane (50) à partir d'une première position, dans laquelle il coopère avec le premier dispositif d'entraînement (3), dans une deuxième position, dans laquelle il coopère avec un deuxième dispositif d'entraînement (4).

7. Système de transport selon l'une des revendications 1 à 6, **caractérisé en ce que** pendant un changement du dispositif d'entraînement (3, 4) les éléments porteurs ne coopèrent avec aucun dispositif d'entraînement (3, 4) dans une zone de transition, les éléments porteurs (21) étant déplaçables de manière passive au moyen d'éléments porteurs (21) suivants le long de la voie de convoyage.

8. Système de transport selon l'une des revendications 1 à 7, **caractérisé en ce que** la voie de convoyage comporte au moins un rail de guidage (20) sur lequel les éléments porteurs (21) sont guidés de manière mobile de manière passive ou au moyen de l'un des dispositifs d'entraînement (3, 4).

9. Installation, en particulier installation de fabrication, d'emballage, de remplissage, de montage et/ou d'usinage, comportant un système de transport (1) selon l'une des revendications 1 à 8.

10. Procédé de transport d'éléments porteurs (21) dans une installation, en particulier une installation de fabrication, d'emballage, de remplissage, de montage et/ou d'usinage, les éléments porteurs (21) étant accouplés, respectivement au moyen d'un dispositif d'accouplement, sélectivement à un premier dispositif d'entraînement (3) ou au moins à un deuxième dispositif d'entraînement (4) pour un déplacement le long d'une voie de convoyage,
**caractérisé en ce que**
le premier et l'au moins un deuxième dispositif d'entraînement (3, 4) fonctionnent de manière synchronisée de façon électronique et/ou mécanique respectivement avec une vitesse de convoyage variable pouvant être définie de manière spécifique à l'application et avec des modes de fonctionnement différents sélectionnés dans le groupe comportant le transport continu, le transport à indice unique, le transport à double indice, le transport à indices multiples,
les éléments porteurs (21) sont déplacés le long de la voie de convoyage au moyen du premier dispositif d'entraînement (3) avec un premier mode de fonctionnement et
au moyen d'un dispositif de commutation (5) les dispositifs d'accouplement des éléments porteurs (21) sont désaccouplés du premier dispositif d'entraînement (3) et sont accouplés à l'au moins un deuxième dispositif d'entraînement (4) pour un déplacement le long de la voie de convoyage avec un deuxième mode de fonctionnement.
